# EUROPEAN PATENT APPLICATION

(11) **EP 1 679 118 A1**
(43) Date of publication of application: **12.07.2006**
(21) Application number: 05075024.9
(22) Date of filing: 07.01.2005
(51) Int. Cl.: B01J 21/16, B01J 23/00, C01F 7/00, C10G 11/18

(54) **Hydrocarbon conversion process using a catalyst composition comprising aluminium and a divalent metal**

(71) Applicant: Albemarle Netherlands B.V., 3818 LE Amersfoort (NL)
(72) Inventor: O'Connor, Paul, 3871 KM Hoevelaken (NL); Stamires, Dennis, Newport Beach, CA 92660 (US)
(74) Representative: Rasser, Jacobus Cornelis

(57) **Abstract**

Fluid catalytic cracking process comprising the steps of (a) preparing a physical mixture comprising (i) aluminium trihydrate and/or flash-calcined aluminium trihydrate and (ii) a divalent metal oxide, hydroxide, carbonate, or hydroxycarbonate, (b) shaping the physical mixture of step a) to form fluidisable particles, and (c) adding the fluidisable particles obtained from step b) or step c) to a fluid catalytic cracking unit.

In this FCC process, active sites of the catalyst composition are formed *in*-*situ,* i.e. in the FCC unit, without requiring peptisation, aging, or calcination steps prior to the addition of the composition to the hydrocarbon conversion unit.

## Description

The present invention relates to a hydrocarbon conversion process using a catalyst composition comprising aluminium and a divalent metal. In a preferred embodiment, it relates to a fluid catalytic cracking (FCC) process using such a catalyst composition.

It is known to use compositions comprising aluminium and a divalent metal, e.g. magnesium, as additives in FCC processes in order to reduce SOx emissions. Examples of such compositions are anionic clays, such as hydrotalcite, and Mg-Al spinel. See for instance EP 0 278 535.

There are several ways to prepare fluidisable particles comprising aluminium and divalent metal-containing compositions.
For instance, WO 01/12570 discloses a process for the preparation of SOx-reducing FCC additives by (a) preparing a mixture of an aluminium and a magnesium source, (b) shaping the mixture to obtain shaped bodies, (c) optionally thermally treating the shaped bodies, and (d) aging the shaped bodies to obtain anionic clay-containing shaped bodies.
WO 96/04986 discloses the use of a bastnaesite/magnesium oxide/alumina compound as SOx-reducing additive in FCC processes. This additive is prepared by (a) peptising pseudo-boehmite in an acidic liquid medium, thereby producing an alumina sol, (b) mixing a magnesium compound with bastnaesite, (c) mixing the bastnaesite/magnesium mixture with the alumina sol, (c) spray-drying the resulting mixture, and (d) calcining the spray-dried mixture at a temperature of 1,000-2,000°F (537-1,093°C).

A disadvantage of these prior art methods is that they require peptisation, aging, and/or calcination steps prior to the addition of the additive to the FCC unit.

It is therefore an object of the present invention to provide a fluid catalytic cracking (FCC) process in which the active sites of the catalyst composition are formed *in-situ,* i.e. in the FCC unit, without requiring peptisation, aging, or calcination steps prior to the addition of the composition to the hydrocarbon conversion unit.

This object is achieved by the process according to the invention, which comprises the steps of:
a) preparing a physical mixture comprising (i) aluminium trihydrate and/or flash-calcined aluminium trihydrate and (ii) a divalent metal oxide, hydroxide, carbonate, or hydroxycarbonate,
b) shaping the physical mixture of step a) to form fluidisable particles, and
c) adding the fluidisable particles to a fluid catalytic cracking unit.

The first step in preparing the fluidisable particles involves the preparation of a physical mixture of (flash-calcined) aluminium trihydrate and divalent metal oxide, hydroxide, carbonate, or hydroxycarbonate. Optionally, a binder or matrix material, a molecular sieve, or other metal compounds may be present.
The advantage of using oxides, hydroxides, carbonates, or hydroxycarbonates of the divalent metal is that these compounds do not contain anions that will decompose into harmful gases in the unit.

The physical mixture can be prepared in various ways. The ingredients can be mixed as dry powders or in (aqueous) suspension.
The physical mixture may be mechanically treated (e.g. milled), either as dry powders or in suspension. Alternatively, or in addition to mechanical treatment of the physical mixture, the divalent metal compound and/or the (flash-calcined) aluminium trihydrate can be mechanically treated individually before forming the physical mixture. Equipment that can be used for mechanical treatment includes ball mills, high-shear mixers, colloid mixers, kneaders, electrical transducers that can introduce ultrasound waves into a suspension, and combinations thereof.

The weight ratio (calculated as metal oxides) of divalent metal compound to (flash-calcined) aluminium trihydrate in the physical mixture preferably ranges from 0.1 to 10, more preferably from 1 to 6, and most preferably from 2 to 4.

Suitable divalent metals include magnesium, zinc, nickel, copper, iron, cobalt, manganese, calcium, barium, strontium, and combinations thereof.
Magnesium oxides, hydroxides, carbonates, and hydroxycarbonates include MgO and Mg(OH)₂, hydromagnesite, magnesium carbonate, magnesium hydroxy carbonate, magnesium bicarbonate, and magnesium-containing clays such as dolomite, saponite, and sepiolite.

The term aluminium trihydrate includes gibbsite, bayerite, nordstrandite, and cruder grades of aluminium trihydrate such as BOC (Bauxite Ore Concentrate). Flash-calcined aluminium trihydrate is obtained by treating aluminium trihydrate at temperatures between about 800 and 1,000°C for very short periods of time in special industrial equipment, as is described in US 4,051,072 and US 3,222,129.

If the physical mixture is prepared in aqueous suspension, dispersing agents can be added to the suspension. Suitable dispersing agents include aluminium chlorohydrol, acid-peptised pseudoboehmite, alumina gels, silica, silicates, surfactants, phosphates (e.g. ammonium phosphate, aluminium phosphate), sugars, starches, polymers, gelling agents, swellable clays, etc. Acids or bases may also be added to the suspension.

As mentioned above, the physical mixture may contain additional compounds, such as matrix or binder materials, molecular sieves, and/or additional metal compounds.
Suitable matrix and/or binder materials include pseudoboehmite, silica-alumina, silica-alumina, clays like kaolin and bentonite, titanium oxide, zirconia, and mixtures thereof.
Suitable molecular sieves include faujasite zeolites such as zeolite X, zeolite Y, USY, REY, and RE-USY, pentasil zeolites such as ZSM-5 and beta, SAPO, ALPO, MCM-41, and mixtures thereof.
Suitable additional metal compounds that can be present in the physical mixture include transition metals like Cu, Zn, Ni, Co, Fe, Mn, Cr, Mo, W, V, Rh, Ru, noble metals like Pt, and Pd and rare earth metals like Ce and La. Rare earth metals can also suitably be added to the physical mixture in the form of bastnaesite.

The physical mixture is prepared at ambient conditions. No thermal treatment is applied to the physical mixture before the subsequent shaping step. But if the physical mixture is formed in aqueous suspension, even without such a treatment the formation of anionic clay cannot be fully excluded. However, formation of more than 10 wt% of anionic clay, based on the total solids content, must be prevented. Preferably, less than 6 wt% of anionic clay is formed, more preferably less than 2 wt% of anionic clay is formed, and most preferably no anionic clay is formed at all.

The physical mixture is subsequently shaped to form fluidisable particles, i.e. particles with a size in the range 10 to 700 microns, preferably 20 to 100 microns. Any suitable shaping method to obtain such particles can be used, including spray-drying and granulation. For the latter method reference is made to WO 04/54713. If liquid is present in the physical mixture, the amount thereof should be adapted to the specific shaping step to be conducted. It may be advisable to (partially) remove the liquid and/or to add additional or other liquid, and/or to change the pH of the mixture to render it gellable and thus suitable for shaping. Various additives commonly used in the various shaping methods may be added to the precursor mixture used for shaping.

The so prepared shaped bodies are added to the FCC unit. At the high temperatures in this unit, the (flash-calcined) aluminium trihydrate and the divalent metal oxide, hydroxide, carbonate, or hydroxycarbonate present in the fluidisable particles will react to form a mixed oxide, which is active in reducing SOx and/or NOx emissions from the regenerator and can also serve for the production of sulfur and/or nitrogen lean fuels, like gasoline and diesel, the passivation of metals, like Ni and V, and to increase the olefin and gasoline production and the bottoms conversion.
If the fluidisable particles are to be used as an FCC additive, the physical mixture of step a) preferably comprises, apart from the divalent metal compound and the (flash-calcined) aluminium trihydrate, a binder material and, preferably, also one or more additional metal compounds selected from the group presented above.
If the fluidisable particles are to be used as FCC catalyst, the physical mixture contains all FCC catalyst ingredients desired to be present. So, in addition to the divalent metal compound and the (flash-calcined) aluminium trihydrate, it may contain binder and matrix material, molecular sieve, and any other material suitably present in such catalysts, such as for instance barium titanate, calcium titanate, strontium titanate, magnesium titanate, barium titanate, and other perovskites.

## Claims

1. Fluid catalytic cracking process comprising the steps of:
a) preparing a physical mixture comprising (i) aluminium trihydrate and/or flash-calcined aluminium trihydrate and (ii) a divalent metal oxide, hydroxide, carbonate, or hydroxycarbonate,
b) shaping the physical mixture of step a) to form fluidisable particles, and
c) adding the fluidisable particles obtained from step b) or step c) to a fluid catalytic cracking unit.

2. A process according to claim 1 wherein the hydrocarbon conversion process is a fluid catalytic cracking process.

3. A process according to claim 1 or 2 wherein the divalent metal compound is selected from the group consisting of magnesium, zinc, nickel, copper, iron, cobalt, manganese, calcium, barium, strontium, and mixtures thereof.

4. A process according to any one of the preceding claims wherein the physical mixture comprises a binder or matrix material.

5. A process according to any one of the preceding claims wherein the physical mixture contains an additional metal compound selected from the group consisting of Cu, Zn, Ni, Co, Fe, Mn, Cr, Mo, W, V, Pt, Pd, Rh, Ru, Ce, and/or La.

6. A process according to any one of the preceding claims wherein the physical mixture comprises a molecular sieve.

7. A process according to any one of the preceding claims wherein the physical mixture is shaped by way of spray-drying.
